Europäisches Patentamt

European Patent Office

Office européen des brevets

(19)

(11) Numéro de publication: **0 031 764**
**B1**

(12) **FASCICULE DE BREVET EUROPEEN**

(45) Date de publication du fascicule du brevet: **10.10.84**

(51) Int. Cl.³: **G 21 C 15/02, G 21 C 5/06**

(21) Numéro de dépôt: **80401819.0**

(22) Date de dépôt: **18.12.80**

(54) Support inférieur du coeur d'un réacteur nucléaire.

(30) Priorité: **19.12.79 FR 7931074**

(43) Date de publication de la demande:
**08.07.81 Bulletin 81/27**

(45) Mention de la délivrance du brevet:
**10.10.84 Bulletin 84/41**

(84) Etats contractants désignés:
**AT BE CH DE GB LI SE**

(56) Documents cités:
**DE-A-2 024 630**
**FR-A-1 445 878**
**FR-A-2 134 250**
**FR-A-2 333 326**
**FR-A-2 339 938**
**FR-A-2 341 919**
**US-A-3 725 199**

(73) Titulaire: **Framatome**
**Tour Fiat 1 place de la Coupole**
**F-92400 Courbevoie (FR)**

(72) Inventeur: **Poitrenaud, Pierre**
**27, avenue du Plateau**
**F-78190 Elancourt (FR)**
Inventeur: **Dupuy, Jean-Pierre**
**8, rue Peletan**
**F-94140 Alfortville (FR)**

(74) Mandataire: **Dupuy, Louis et al**
**CREUSOT-LOIRE 15 rue Pasquier**
**F-75383 Paris Cedex 8 (FR)**

Courier Press, Leamington Spa, England.

EP 0 031 764 B1

## Description

L'invention est relative aux réacteurs nucléaires du type refroidis à l'eau légère, tels que ceux utilisés pour la production d'énergie électrique ou la propulsion navale.

Un réacteur nucléaire de ce type est constitué d'une cuve cylindrique comportant un fond de cuve de forme hémisphérique et un couvercle amovible, également de forme hémisphérique, à l'intérieur de laquelle se trouve le coeur du réacteur constitué d'assemblages combustibles. Le coeur est contenu dans une structure interne à la cuve soutenue dans le haut de celle-ci et essentiellement constituée d'une bride supérieure, d'une virole et d'un fond support recevant les assemblages combustibles. Les assemblages combustibles sont refroidis par un fluide caloporteur, le fluide primaire. Celui-ci pénètre dans la cuve par plusieurs tubulures d'entrée, passe par une zone annulaire comprise entre la cuve et la structure interne qui contient le coeur, arrive dans une chambre inférieure comprise entre le fond de cuve et le fond support de la structure interne, puis remonte ensuite à travers le fond support, qui est perforé, vient refroidir le coeur et est finalement évacué par une pluralité de tubulures de sortie.

On connaît actuellement plusieurs modes de réalisation du fond support.

Dans un premier mode de réalisation connu, le coeur ne repose pas directement sur le fond support mais sur une plaque inférieure de coeur située au-dessus du fond support et reliée à celui-ci au moyen d'un certain nombre de colonnes. Le fond support se présente sous la forme d'une plaque épaisse percée d'un certain nombre de canaux et la plaque inférieure de coeur est percée de trous au droit de chaque assemblage combustible. Le fluide primaire, après être passé à travers les canaux du fond support, est réparti dans le coeur au moyen des trous percés dans la plaque inférieure de coeur.

Ce mode de réalisation présente un certain nombre d'inconvénients. En particulier, il ne permet pas une utilisation optimale du volume intérieur de la cuve du réacteur puisque l'espace entre le fond support et la plaque inférieure de coeur ne contient pas de combustible. En outre, cette disposition nécessite l'assemblage, l'usinage et le réglage d'un grand nombre de pièces.

Le dispositif du brevet américain US—A—3.725.199 se rapproche de ce premier mode de réalisation, bien qu'il en diffère du fait qu'il est essentiellement prévu pour prélever à l'entrée du coeur une partie du fluide froid et de le conduire par les tubes guides 56 et 57 à une certaine hauteur dans les éléments combustibles pour reculer le départ de l'ébullition nucléée. La taille des orifices percés dans le fond support peut varier afin de rendre optimales les conditions de fonctionnement à l'intérieur du coeur.

Dans un autre mode de réalisation connu les assemblages combustibles reposent directement sur le fond support. On pourra se reporter par exemple au brevet français FR—A—2.339.938 qui décrit une telle réalisation. Comme le fond support joue, dans cette réalisation, à la fois le rôle de support des assemblages combustibles et de distributeur du fluide primaire, celui-ci est constitué d'une plaque épaisse percée de canaux réalisés avec des orifices d'étranglement permettant une chute de pression de fluide primaire. L'usinage de ces canaux munis de tels orifices peut s'avérer une opération délicate. En outre, cette réalisation ne permet pas de contrôler la répartition du fluide dans le coeur, c'est-à-dire d'augmenter le débit du fluide dans certaines régions du coeur et de le diminuer dans d'autres régions.

L'invention tente de remédier aux inconvénients et aux lacunes précités.

L'invention propose un nouveau support inférieur de coeur qui permette de différencier les fonctions de support des assemblages combustibles et de distribution du fluide primaire tout en présentant un encombrement minimum, en diminuant les opérations d'usinage et d'assemblage du fond support et en offrant la possibilité de mieux contrôler la répartition du fluide dans les différentes régions de coeur.

L'invention s'applique au support inférieur du coeur d'un réacteur nucléaire, destiné à supporter chacun des assemblages combustibles du coeur et à distribuer le fluide primaire de refroidissement au travers de ces assemblages.

Selon l'invention, le support est constitué:

— d'une première plaque, épaisse, supportant les assemblages combustibles et percée au droit de chaque assemblage, de canaux verticaux destinés au passage du fluide primaire,

— d'une seconde plaque, mince, percée d'orifices, fixée sous la première plaque, sans espace entre les deux plaques et telle que chaque orifice soit situé au droit de l'un des canaux, que la section de chacun des orifices soit inférieure à celle de chacun des canaux, que chacun des canaux soit ouvert sur au moins un orifice et que le nombre des orifices se trouvant au droit de chaque canal varie en fonction de leur position sur ladite plaque.

De préférence, la section de chaque canal percé dans la première plaque est constante.

Dans un mode préféré de réalisation de l'invention, le nombre des orifices de la seconde plaque au droit de chaque canal diminue lorsque l'on va du centre de la plaque vers la périphérie de celle-ci.

En outre, pour permettre le passage d'instruments de contrôle de l'intérieur du coeur à travers le fond support, la première plaque est percée de canaux étroits verticaux et la seconde plaque est percée de petits orifices au droit de ces canaux étroits. Ces canaux sont prolongés en-dessous de la seconde plaque par des colonnes qui sont centrées sur des pénétrations de cuve.

La deuxième plaque comporte, comme moyens de fixation à la première plaque, des moyens de fixations qui lui sont propres, mais aussi les moyens de fixation de l'embase des colonnes précitées à l'ensemble formé par les deux plaques.

Dans une variante de réalisation de l'invention, la seconde plaque est constituée par un ensemble de plaques plus petites juxtaposées, chaque petite plaque étant fixée à la première plaque indépendamment des plaques voisines.

Au droit des canaux destinés au passage des instruments de contrôle de l'intérieur du coeur, les petites plaques sont constituées par les embases elles-mêmes des colonnes qui prolongent lesdits canaux.

L'invention sera mieux comprise en se référant à deux modes de réalisation, décrits uniquement à titre d'exemples, et représentés par les dessins annexés.

La figure 1 est une vue, en coupe, d'une cuve de réacteur nucléaire comportant un support inférieur de coeur selon l'invention.

Les figures 2 et 3 représentent, à une échelle plus grande, une partie du support inférieur de coeur de la figure 1, avec les assemblages combustibles reposant sur ce support. La figure 2 est une coupe suivant A—A de la figure 3. La figure 3 est une vue suivant B de la figure 2.

Les figures 4 et 5 sont des vues semblables à celles des figures 2 et 3, mais dans le cas où la seconde plaque est formée de petites plaques juxtaposées. La figure 4 est une coupe suivant C—C de la figure 5.

La figure 5 est une vue suivant D de la figure 4.

Sur toutes les figures, les éléments correspondants portent les mêmes références.

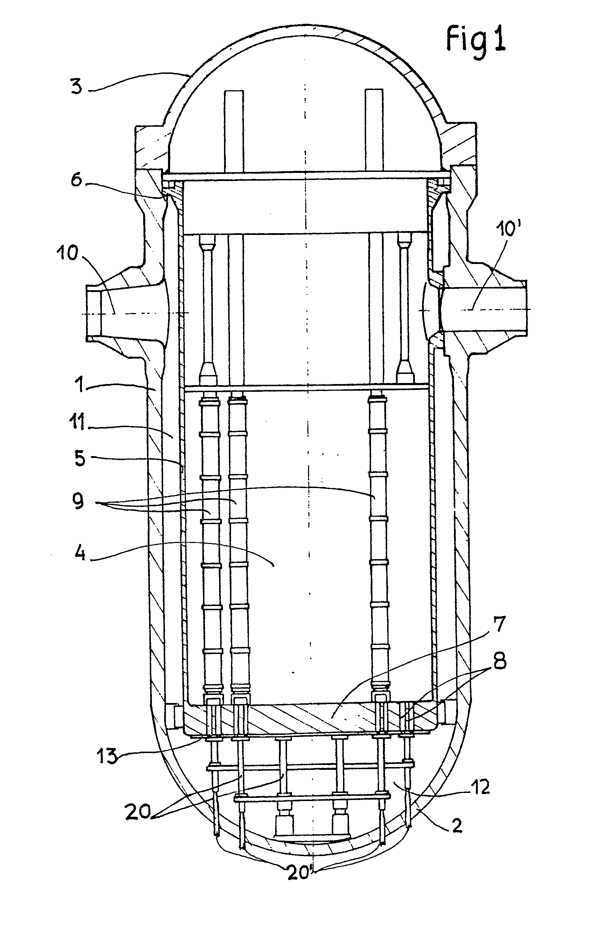

On se reportera tout d'abord à la figure 1.

La figure 1 représente une cuve de réacteur nucléaire comportant un corps cylindrique 1 fermé d'une part par un fond de cuve de forme hémisphérique 2 et d'autre part par un couvercle amovible, également de forme hémisphérique, 3. Le coeur 4 du réacteur est contenu dans une structure interne 5 qui est suspendue dans la cuve en reposant sur un épaulement 6 de celle-ci et dont le fond est formé par une plaque épaisse 7 percée de canaux verticaux 8.

Les assemblages combustibles 9 reposent directement sur la plaque épaisse 7, au droit des canaux 8.

En vue de refroidissement de ces assemblages, un fluide de refroidissement, le fluide primaire, pénètre dans la cuve 1 par plusieurs tubulures d'entrée 10, passe par une zone annulaire 11 comprise entre le corps cylindrique 1 de la cuve et la paroi de la structure interne 5, arrive dans une chambre 12 délimitée par le fond de cuve 2 et la plaque 7, remonte ensuite à travers la plaque 7 jusqu'aux assemblages combustibles 9 pour être finalement évacué par une pluralité de tubulures de sortie 10'.

Sous la plaque épaisse 7 est fixée une plaque mince 13 au moyen de vis 14. Cette plaque est centrée au moyen de broches 15. La plaque mince 13 est percée d'orifices 16 comportant des chanfreins d'entrée 17 et situés au droit de chaque canal 8. Ces orifices ont un diamètre inférieur à celui des canaux 8. Ainsi, la pression du fluide primaire diminue lors de son passage de la chambre 12 au coeur du réacteur 4.

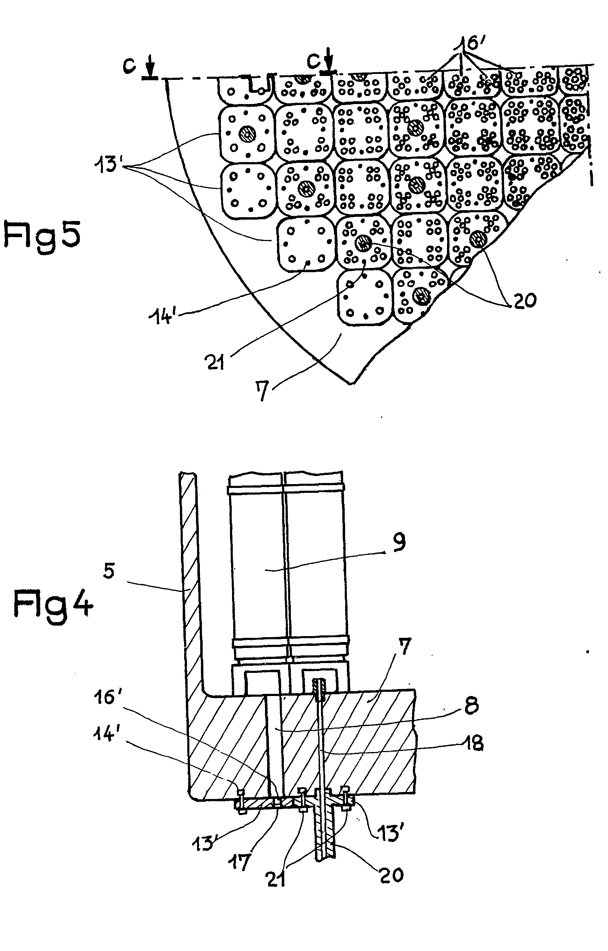

Le nombre des orifices 16 au droit de chaque canal 8 varie en fonction de leur position sur la plaque 13. En se reportant à la figure 3 on voit que le nombre des orifices 16 diminue lorsque l'on va du centre du coeur, qui est une zone chaude, vers la périphérie e celui-ci, qui est une zone moins chaude.

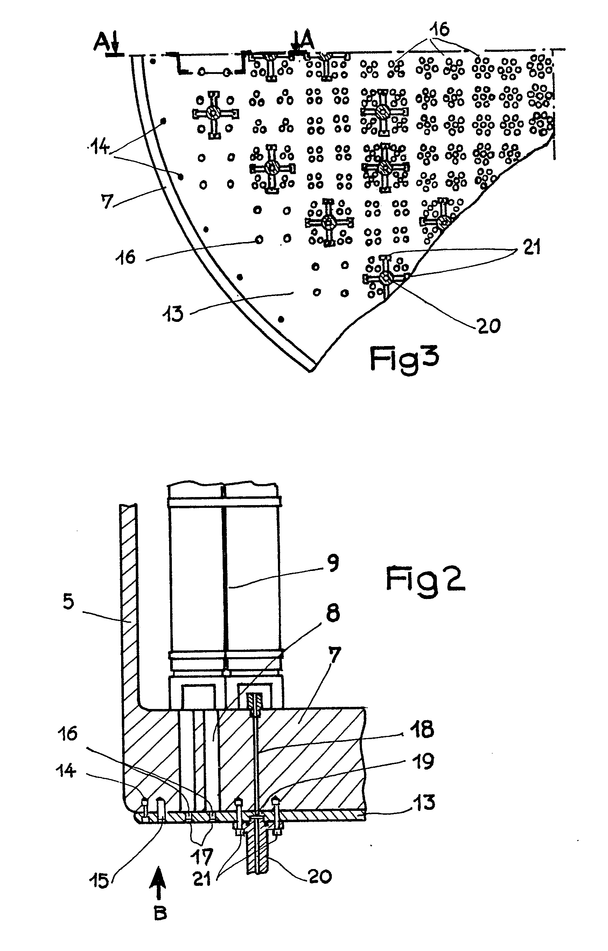

On a représenté aussi sur les figures 2 et 3 les canaux étroits 18 destinés au passage d'instruments de contrôle des assemblages combustibles 9. Ces canaux 18 sont percés dans la plaque épaisse 7. Au droit de ces canaux, de petits orifices 19 sont percés dans la plaque 13. Les canaux 18 sont prolongés au-dessous de la plaque 13 par des colonnes 20 centrées sur des pénétrations de cuve 20' et dont l'embase est fixée à l'ensemble des plaques 7 et 13 au moyen de vis 21. Les vis 21 participent non seulement à la fixation de l'embase des colonnes 20 sur la plaque 1 mais aussi au maintien de la plaque 13 contre la plaque 7.

On se reportera maintenant aux figures 4 et 5. Ces figures représentent une variante selon laquelle la plaque mince 13 est constituée par un ensemble de plaques indépendantes 13'.

Chaque plaque 13' a une forme carrée, est munie de quatre groupes d'orifices 16' de répartition du fluide et este fixée à la plaque 7 par des vis 14'. Le nombre d'orifices de chaque groupe diminue lorsque l'on va du centre du coeur vers la périphérie de celui-ci.

Les plaques 13' qui sont situées au droit de chaque canal 18 destiné au passage de l'instrumentation de contrôle sont en fait constituées par l'embase elle-même de la colonne 20 qui prolonge chaque canal 18.

Sur la figure 5 on a représenté les orifices 16' de la même façon que les orifices 16 de la figure 3 c'est à dire que leur nombre diminue du centre vers la périphérie de la plaque 7.

Le support inférieur de coeur suivant l'invention présente de nombreux avantages:

Il permet de différencier les fonctions de support du combustible (plaque épaisse 7) et de distribution du fluide (plaque mince 13) tout en présentant un encombrement minimum (les plaques 7 et 13 sont fixées l'une contre l'autre sans espace entre elles) et en diminuant le plus possible les opérations d'usinage et d'assemblage (canaux 8 de diamètre constant faciles à usiner—orifices 16 de diamètre constant—vis communes pour la fixation des colonnes 20 et pour la fixation des plaques 7 et 13 entres elles—embase des colonnes 20 constituant des plaques 13').

En outre le support inférieur de coeur suivant l'invention offre la possibilité de bien contrôler la répartition du fluide primaire dans le coeur. En particulier il permet d'augmenter le débit du fluide au centre du coeur et de diminuer celui-ci à la périphérie.

Bien entendu, l'invention n'est pas limitée aux modes de réalisation qui ont été décrits à titre d'exemples.

Ainsi, les plaques indépendantes 13' pourraient être de forme quelconque et comporter plus de quatre groupes d'orifices, c'est à dire se trouver au droit d'un plus grand nombre d'assemblages combustibles que sur les figures 4 et 5. Il est bien entendu que l'invention peut s'appliquer à tout type de réacteur refroidi à l'eau légère, quelle que soit l'utilisation qui en est faite. Le plus souvent, les réacteurs selon l'invention pourront être utilisés pour la production d'énergie électrique ou la propulsion navale.

**Revendications**

1. Support inférieur du coeur d'un réacteur nucléaire, destiné à supporter chacun des assemblages combustibles du coeur et à distribuer le fluide primaire de refroidissement au travers de ces assemblages, caractérisé par le fait qu'il est constitué:

— d'une première plaque (7), épaisse, supportant les assemblages combustibles (9) et percée, au droit de chaque assemblage (9), de canaux verticaux (8) destinés au passage du fluide primaire,

— d'une seconde plaque (13), mince, percée d'orifices (16), fixée sous la première plaque (7), sans espace entre les deux plaques, et telle que chaque orifice (16) soit situé au droit de l'un des canaux (8), que la section de chacun des orifices (16) soit inférieure à celle de chacun des canaux (8), que chacun des canaux (8) soit ouvert sur au moins un orifice (16), et que le nombre des orifices (16) se trouvant au droit de chaque canal (8) varie en fonction de leur position sur ladite plaque (13).

2. Support inférieur du coeur d'un réacteur nucléaire selon la revendication 1, caractérisé par le fait que le nombre des orifices (16) de la seconde plaque (13) diminue lorsque l'on va du centre de la plaque (13) vers la périphérie de celle-ci.

3. Support inférieur du coeur d'un réacteur nucléaire selon l'une des revendications 1 ou 2, caractérisé par le fait que la section de chaque canal (8) est constante.

4. Support inférieur du coeur d'un réacteur nucléaire selon l'une des revendications précédentes, caractérisé par le fait que la première plaque (7) est percée en outre de canaux étroits verticaux (18) et que la seconde plaque (13) est percée de petits orifices (19) au droit de ces canaux étroits (18), en vue du passage d'instruments de contrôle de l'intérieur du coeur, ces canaux étant prolongés en-dessous de la seconde plaque par des colonnes (20) qui sont centrées sur des pénétrations de cuve, et que la deuxième plaque (13) comporte comme moyens de fixation à la première plaque (7), non seulement ses moyens de fixation propres (14) mais aussi les moyens de fixation (21) de l'embase des colonnes (20) à l'ensemble formé par les deux plaques (13, 7).

5. Support inférieur du coeur d'un réacteur nucléaire selon l'une des revendications précédentes, caractérisé par le fait que la seconde plaque (13) est constituée par un ensemble de plaques (13') plus petites juxtaposées, chaque petit plaque (13') étant fixée à la première plaque (7) indépendamment des plaques (13') voisines.

6. Support inférieur du coeur d'un réacteur nucléaire selon la revendication 4, caractérisé par le fait que la second plaque (13) est constituée par un ensemble de plaques plus petites (13') juxtaposées, chaque petite plaque (13') étant fixée à la première plaque (7) indépendamment des plaques voisines (13') et que, au droit des canaux (18) destinés au passage des instruments de contrôle du coeur, ces petites plaques (13') sont constituées par les embases des colonnes (20) prolongeant lesdits canaux (18).

7. Support inférieur du coeur d'un réacteur nucléaire selon l'une des revendications précédentes, caractérisé par le fait que les orifices (16, 16') de la seconde plaque (13, 13') comportent des chanfreins (17) du côté qui n'est pas en contact avec la première plaque (7).

**Patentansprüche**

1. Untere Abstützung für die Spaltzone bzw. aktive Zone eines Kernreaktors, die dazu bestimmt ist, jeden der Brennsätze der Spaltzone abzustützen und das primäre Kühlungsfluid über diese Sätze zu verteilen, dadurch gekennzeichnet, daß sie besteht:

— aus einer ersten, dicken Platte (7), welche die Brennsätze (9) abstützt und nahe bei jedem Brennsatz (9) bzw. am Ort jedes Brennsatzes (9) von vertikalen Kanälen (8) durchbrochen ist, die zum Durchlassen des primären Fluids bestimmt sind,

— aus einer zweiten, dünnen Platte (13), die von Öffnungen (16) durchbrochen und an der ersten Platte (7) ohne Zwischenraum zwischen den beiden Platten so befestigt ist, daß jede Öffnung (16) nahe bei einem der Kanäle (8) angeordnet bzw. gerade mit diesem ausgerichtet ist, daß der Durchmess jeder der Öffnungen (16) geringer ist als der jedes der Kanäle (8), daß jeder der Kanäle (8) an wenigstens einer Öffnung (16) offen ist und daß die Zahl der Öffnungen (16), die in der Nähe jedes Kanals (8) vorhanden sind bzw. die gerade mit jedem Kanal (8) ausgerichtet sind, in Abhängigkeit von ihrer Position auf der Platte (13) variiert.

2. Untere Abstützung für die Spaltzone eines Kernreaktors nach Anspruch 1, dadurch gekennzeichnet, daß die Anzahl der Öffnungen (16) der zweiten Platte (13) in Richtung vom Mittelpunkt der Platte (13) auf deren Umfang zu abnimmt.

3. Untere Abstützung für die Spaltzone eines Kernreaktors nach einem der Ansprüche 1 oder 2, dadurch gekennzeichnet daß der Querschnitt jedes der Kanäle (8) konstant ist.

4. Untere Abstützung für die Spaltzone eines Kernreaktors nach einem der vorhergehenden Ansprüche, dadurch gekennzeichnet, daß die erste Platte (7) außerdem von engen vertikalen Kanälen (18) und die zweite Platte (13) von kleinen Öffnungen (19) durchbrochen bzw. durchsetzt ist, die am Ort der engen Kanäle (18) angeordnet bzw. mit diesen gerade ausgerichtet sind, um Kontrollinstrumente für das Innere der Spaltzone durchzulassen, wobei diese Kanäle unterhalb der zweiten Platte durch Säulen (20) verlängert sind, die auf Durchdringungen bzw. Zutritte des Behälters zentriert sind, und daß die zweite Platte (13) als Befestigungseinrichtung auf der ersten Platte (7) nicht nur ihre eigenen Befestigungseinrichtungen (14) sondern auch die Befestigungseinrichtungen (21) der Fußfläche bzw. des Ansatzes der Säulen (20) an der aus den beiden Platten (13, 7) bestehenden Anordnung besitzt.

5. Untere Abstützung für die Spaltzone eines Kernreaktors nach einem der vorhergehenden Ansprüche, dadurch gekennzeichnet, daß die zweite Platte (13) aus einer Anordnung von kleineren, in Verbundanordnung nebeneinanderliegenden Platten (13') besteht, wobei jede kleine Platte (13') an der ersten Platte (7) unabhängig von den angrenzenden bzw. benachbarten Platten (13') befestigt ist.

6. Untere Abstützung für die Spaltzone eines Kernreaktors nach Anspruch 4, dadurch gekennzeichnet, daß die zweite Platte (13) aus einer Anordnung von kleineren, in Verbundanordnung nebeneinanderliegenden Platten (13') besteht, daß jede kleine Platte (13') an der ersten Platte (7) unabhängig von den benachbarten Platten (13') befestigt ist und daß am Ort der für das Durchlassen der Kontrollinstrumente für die Spaltzone bestimmten Kanäle (18) bzw. gerade ausgerichtet mit diesen die kleinen Platten (13') von den Ansätzen der Säulen (20) gebildet sind, welche die Kanäle (18) verlängern.

7. Untere Astützung für die Spaltzone eines Kernreaktors nach einem der vorhergehenden Ansprüche, dadurch gekennzeichnet, daß die Öffnungen (16, 16') der zweiten Platte (13, 13') Abschrägungen bzw. Abfasungen (17) auf jener Seite aufweisen, die nicht mit der ersten Platte (7) in Berührung steht.

## Claims

1. Lower support of the core of a nuclear reactor, intended to support each of the fuel assemblies of the core and to distribute the primary cooling fluid through these assemblies, characterised in that it is formed by:

— a first, thick plate (7) supporting the fuel assemblies (9) and pierced, opposite each assembly (9), by vertical channels (8) intended for the passage of the primary fluid,
— a second, thin plate (13), pierced by orifices (16), fixed under the first plate (7) without a space between the two plates, and such that each orifice (16) is situated opposite one of the channels (8), that the cross-section of each of the orifices (16) is smaller than that of each of the channels (8), that each of the channels (8) is open towards at least one orifice (16), and that the number of orifices (16) present opposite each channel (8) varies as a function of their position on the said plate (13).

2. Lower support of the core of a nuclear reactor according to Claim 1, characterised in that the number of orifices (16) of the second plate (13) diminishes from the centre of the plate (13) towards the periphery of the latter.

3. Lower support of the core of a nuclear reactor according to either of Claims 1 or 2, characterised in that the cross-section of each channel (8) is constant.

4. Lower support of the core of a nuclear reactor according to one of the preceding claims, characterised in that the first plate (7) is additionally pierced by narrow vertical channels (18) and that the second plate (13) is pierced by small orifices (19) opposite these narrow channels (18), for the purpose of passing instruments for monitoring the inside of the core, these channels being extended below the second plate by pillars (20) centred on the penetrations of the vessel and that the second plate (13) comprises, as means for fixing to the first plate (7), not only its own means of fixing (14) but also means for fixing (21) the footing of the pillars (20) to the unit formed by the two plates (13, 7).

5. Lower support of the core of a nuclear reactor according to one of the preceding claims, characterised in that the second plate (13) is formed by a set of smaller, juxtaposed plates (13'), each small plate (13') being fixed to the first plate (7) independently of the neighbouring plates (13').

6. Lower support of the core of a nuclear reactor according to Claim 4, characterised in that the second plate (13) consists of a set of smaller, juxtaposed plates (13'), each small plate (13') being fixed to the first plate (7) independently of the neighbouring plates (13') and that, opposite the channels (18) intended for the passage of instruments for monitoring the core, these small plates (13') consist of the footings of the pillars (20) extending the said channels (18).

7. Lower support of the core of a nuclear reactor according to one of the preceding claims, characterised in that the orifices (16, 16') of the second plate (13, 13') comprise chamfers (17) on the side which is not in contact with the first plate (7).

Fig 1

Fig3

Fig2

Fig 5

Fig 4